Europäisches Patentamt

European Patent Office

Office européen des brevets

(11) Publication number: **0 012 063**
**B1**

(12) # EUROPEAN PATENT SPECIFICATION

(45) Date of publication of patent specification: **14.04.82**

(21) Application number: **79400885.4**

(22) Date of filing: **19.11.79**

(51) Int. Cl.³: **B 01 J 2/28, C 22 B 1/14,
C 04 B 21/06, C 01 G 1/02**

(54) Process for preparing porous metal oxide beads.

(30) Priority: **22.11.78 US 962976**

(43) Date of publication of application:
**11.06.80 Bulletin 80/12**

(45) Publication of the grant of the patent:
**14.04.82 Bulletin 82/15**

(84) Designated Contracting States:
**DE FR GB**

(56) References cited:
**CH - A - 494 197
CH - A5 - 577 342
CH - A5 - 604 826
DE - A - 2 121 520
DE - B - 1 150 953
DE - B - 1 280 513
DE - C - 490 952
GB - A - 1 033 560**

(73) Proprietor: **NUCLEAR CONSULTING SERVICES,
INC.
6400 Hundley Road
Columbus, Ohio 43229 (US)**

(72) Inventor: **Kovach, Julius Louis
c/o Nuclear Consulting Ser. Inc. 6400 Huntley
Road
Columbus, Ohio 43229 (US)**

(74) Representative: **Mongrédien, André et al,
c/o Brevatome 25, rue de Ponthieu
F-75008 Paris (FR)**

Process for preparing porous metal oxide beads

### Background of the Invention

This invention relates to the production of porous beads and more particularly to the production of porous beads composed primarily of metal oxides which beads are useful as catalysts, adsorbents, reactive solids for liquid phase and gas phase reactions, and as composites of fissile materials.

A number of methods currently are used to prepare bead-like material having a porous structure and particularly beads comprising mainly metal oxides. These methods generally consist of depositing metal salts from solution onto beads of ion exchange resins and subsequently decomposing the resin under controlled conditions to yield porous metal oxide beads. These processes, however, are not satisfactory. The ratio of acceptable bead material to the starting materials is only about 1:20, thus making the finished product expensive. Moreover, the preparation of large diameter beads is particularly difficult to accomplish by such prior methods. Specific reference is made to the following prior proposals in this area: U.S. Patents Nos. 3,792,136 and 3,309,434; British Patent No. 1,033,560; Swiss Patent No. 577,342; and German Patent DE—B—1,150,953 and DE—A—2,121,520.

With specific reference to German Patent DE—B—1,150,953, such reference discloses a process for making porous bead-like material having features including mixing a powdered metal oxide and a thermally decomposable organic binder, forming the resulting mixture into particles having a uniform particle size, and heating the particles at a temperature sufficient to convert the organic binder into carbonaceous material. This reference, however, prefers to pressure mold the mixture for forming pellets prior to the decomposition of the organic binder and the organic binder shown is a polyvinyl material, preferably polyvinyl alcohol. The present invention does not use any pressure-molding technique as such pressure molding tends to reduce the desired porosity of the bead-like material produced by the process of the present invention and tends to make pellets rather than beads. Further, the organic binder used in the present invention comprises a monomer of a thermosetting polymer or copolymer, which binder is cured for forming beads which are easily and readily handleable without endangering crushing of the thus-formed beads.

### Summary of the Invention

The present invention is an improvement in process for making porous, bead-like material of controlled particle size wherein a powdered metal oxide is mixed with a polymeric material, such as a polyvinyl compound as disclosed in German Patent No. 1,150,953, the mixture formed into said bead-like material, and then heated at high temperature. The improvement is characterized by the steps of:

(a) mixing a powdered metal oxide, a thermally decomposable organic binder comprising a monomer of a thermosetting polymer or copolymer, and optionally a powdered porosity control agent;

(b) forming the resulting mixture into particles having a uniform particle size;

(c) heating said formed particles of step (b) at a temperature sufficient to cure said binder; and

(d) further heating said particles at a temperature sufficient to convert said cured binder and said optional porisity control agent to carbonaceous material.

### Detailed Description of the Invention

The metal oxides used in the process of this invention can be any of the metal oxides which are useful as adsorbents, catalysts, fissile materials, or as reaction sites for liquid phase and gas phase reactions. Preferred metal oxides are iron oxide ($Fe_2O_3$), thoria, manganese oxide ($MmO_2$), vanadium oxide ($V_2O_5$), and mixtures of one or more of these. The powdered metal oxides preferably have a particle size of less than 20 microns. In some instances, the use of a metal oxide powder of a larger particle size is possible.

The thermally decomposable organic binder can be any of a number of monomers of thermosetting polymers such as styrene, divinyl benzene, or furfuryl alcohol. Liquid phenol formaldehyde resin binders also can be used. Of these binder materials styrene is preferred.

In some instances, it is desirable to add a porosity expanding or porosity control agent. Porosity expanders serve to increase and to control the amount of void space in the final product. Preferably, such expanders are made up only of the chemical elements: carbon, oxygen, hydrogen, and nitrogen. They should decompose (char) without melting and should be free of contaminants such as sulfur or chlorine. Porosity expander and control agents which can be used include powdered starch, sugar, cellulose, finely-divided carbon such as carbon black, wood flour, and mixtures of these. The preferred agent is starch.

To make the porous bead material, the powdered metal oxide and thermally decomposable binder first are mixed in a ratio of between 10 and 30 parts by weight of binder to 100 parts of metal oxide powder, and preferably in a ratio of between 15 and 25 parts by weight of binder to 100 parts of metal oxide powder. If a porosity control or expander agent is to be used, it is also blended into the mixture in a ratio of between 20 and 60 parts per 100 parts of metal oxide. The mixture then is formed into beads by rolling the metal oxide-binder mixture on sieve of sufficient mesh size to produce beads of between 8 and 40 mesh size ASTM (between about 2.38 mm and 0.42 mm). Alternatively, the porous beads can be formed by admitting the mixture to a high-shear mixer with the mixer speed (induced mixing shear) being correlated and adjusted to the ultimate bead size desired.

The formed beads are dried by exposing them to air and then are heated to a temperature sufficient to cure the thermosetting resin. The beads now are in a form which can be easily handled. The beads next are heated to a temperature of up to 350°C to decompose the thermosetting binder and porosity control agent. The resulting product is a mass of free-flowing bead-like material which is a composite of carbon and metal oxide.

In some instances it is desirable to form beads having a composition consisting of metal oxide only. This is accomplished by further heating of the beads to a temperature of up to 900°C in an oxidizing atmosphere (such as gaseous oxygen or air) until all carbonaceous material is consumed leaving only a porous bead composed of metal oxide alone. If iron oxide of the $Fe_2O_3$ form is used in the original mixing operation, further heating can be done under vacuum to convert the iron oxide to $Fe_3O_4$, if desired.

The product either obtained by heating only to carbonize the binder and porosity control agent, if the latter is present, or obtained by further oxidizing the carbonaceous material, is a bead-like material having a hard, free-flowing, smooth spherical or near spherical shape of closely controlled particle size. The volume of the finished porous bead-like material in relation to the volume of the starting material is about 2:3 to 1:3, a substantial improvement over the prior art methods of making similar bead-like material.

The porous beads of the present invention typically have a mean porosity of from about 0.025 to 20 microns and a total pore volume of from about 0.10 to 0.35 cm³/g. The preferred mean porosity of the beads is from about 0.05 to about 10 microns and the preferred total pore volume is from about 0.15 to 0.25 cm³/g, especially for carbon-free $Fe_2O_3$ beads. By way of illustration only, carbon-free $Fe_2O_3$ porous beads, preferably also will possess a bulk density of about 1.8—2.3 g/cm³, a particle size range of from about 0.1 to 5 mm, and a crushing strength of about 50 grams minimum on a per-bead basis. It should be noted further that the porous beads can be produced to have a definite pre-determined pore volume for a given average bead or particle size. Such pore volume bead size control can be exercised to produce ostensibly mono-disperse size particles of very specific pore volume or can be exercised to produce a range of particle sizes linearly related to a range of pore volumes. The ultimate beads may be classified to ensure a cut of particles having the most narrow of particle size distribution desired for a particular purpose and/or to eliminate accidental or intended oversize particles or fines generated by the process.

In practicing the present invention the heating steps, from the initial polymerization step to the step of oxidation of all carbonaceous material, can be done in one continuous step or in distinct separate heating operations as is necessary, desirable, or convenient.

The present best mode of practicing the process of the present invention is to use a metal oxide combined with a styrene binder and powdered starch porosity control agent, if the latter is desired. The best procedure of forming the beads from this mixture is by rolling the mixture on a sieve, such as a gyrating sieve, a procedure known to those skilled in the art. The best temperature for the initial carbonizing step is 350°C. and the best temperature for oxidizing the carbonaceous material is 900°C.

### Example 1

Powdered iron oxide ($Fe_2O_3$) of analytical grade was thoroughly blended with powdered starch in a weight ratio of 2 parts of iron oxide to 1 part of starch. A liquid mixture of styrene and divinyl benzene was added to the powder blend in a ratio of 4 parts by weight of dry blend to 1 part by weight of liquid monomer mixture. The resulting mixture was placed in a gyrating screen and shaken for 30 minutes. The mesh size of the screen was sufficient to produce beads of approximately 8 to 40 mesh ASTM sieve size (between about 2.38 mm and 0.42 mm). The bead-like mixture then was air dried, first heated to a temperature of 100°C. to polymerize the binders, and then subsequently heated to a temperature of 350°C. to carbonize the beads. The resulting carbon oxide composite beads then were sintered at 900°C. in air to remove the carbon, leaving a high purity, hard, porous bead-like material comprising $Fe_2O_3$.

### Example 2

The procedure of Example 1 was repeated except that the product was heated further under vacuum to a temperature of 1300°C. to convert the $Fe_2O_3$ to $Fe_3O_4$.

### Example 3

The mixing, bead forming, and air drying procedures of Example 1 were repeated. The beads then were heated to a temperature of 100°C. to polymerize the binder followed by their heating to a temperature of 900°C. in an atmosphere of $CO_2$, thereby forming porous beads composed of activated carbon and a mixture of $Fe_2O_3$ and $Fe_3O_4$.

### Example 4

The mixing procedure, bead forming, and air drying procedure of Example 1 were repeated. The beads then were heated to a temperature of 100°C. to polymerize the binder followed by their heating to a temperature of 900°C. in an atmosphere of $CO_2$ and CO. The resulting bead product was a composite of activated carbon and $Fe_3O_4$.

### Example 5

The procedure of Example 1 was repeated, except that the metal oxide was thoria.

### Example 6

The procedure of Example 1 was repeated, except that the metal oxide was manganese oxide ($MnO_2$).

### Example 7

The procedure of Example 1 was repeated, except that the metal oxide was vanadium oxide.

### Example 8

The procedure of Example 1 was repeated, except that the binder was furfuryl alcohol.

### Example 9

The procedure of Example 1 was repeated, except that the porosity control agent was powdered cellulose.

## Claims

1. A process for making porous, bead-like material of controlled uniform particle size wherein a powdered metal oxide is mixed with an organic binder, the mixture formed into said bead-like material, and then heated at high temperature, characterized by the steps of:

(a) mixing a powdered metal oxide, a thermally decomposable organic binder comprising a monomer of a thermosetting polymer or copolymer, and optionally a powdered porosity control agent;

(b) forming the resulting mixture into particles having a uniform particle size;

(c) heating said formed particles of step (b) at a temperature sufficient to cure said binder; and

(d) further heating said particles at a temperature sufficient to convert said cured binder and said optional porosity control agent to carbonaceous material.

2. A process according to Claim 1, characterized in that said powdered metal oxide is $Fe_2O_3$, thoria, manganese oxide, vanadium oxide, or mixtures thereof; said thermally decomposable organic binder comprises styrene, divinyl benzene, furfuryl alcohol, liquid phenol-formaldehyde resin, or mixtures thereof; and said optional porosity control agent is sugar, starch, cellulose, carbon black, wood flour, or mixtures thereof.

3. A process according to any one of the preceding claims, characterized in that said further heating step (d) is followed by an additional heating step (e) wherein said heated particles of step (d) additionally are heated in an oxidizing atmosphere at a temperature sufficient to oxidize said carbonaceous material to produce carbon-free, porous metal oxide particles; or wherein said further heated particles of step (d) additionally are heated in an atmosphere of CO, $CO_2$ or $CO/CO_2$ at a temperature sufficient to produce particles of activated carbon and metal oxide.

4. A process according to any one of claims 2 or 3, characterized in that said heating of step (c) is at about 100°C., said heating step (d) is at about 350°C., and said heating step (e) is at about 900°C.

5. A process according to any one of the preceding claims, wherein said forming step (b) is characterized by rolling said mixture on a sieve of selected mesh size or subjecting said mixture to controlled high-shear mixing to form said particles of a uniform particle size.

6. A process according to any one of the preceding claims, characterized in that said powdered metal oxide and said organic binder are mixed in a weight ratio of between about 10 and 30 parts of said binder to 100 parts of said metal oxide, and said optional porosity control agent is mixed in a weight ratio of between about 20 parts and 60 parts of said agent to 100 parts of said metal oxide.

7. A process according to any one of the preceding claims, characterized in that the volume ratio of said mixture of step (a) to said particles made by the process is between about 2:3 and 1:3.

8. A process according to any one of the preceding claims, characterized in that the mean porosity in said particles is between about 0.025 and 20 microns and the total pore volume in said particles is between 0.10 and 0.35 cm³/g.

9. A process according to any one of the preceding claims, characterized in that said metal oxide is $Fe_2O_3$; said particles are carbon-free; and said $Fe_2O_3$ particles have a mean porosity of between about 0.05 to 10 microns, a total pore volume of between 0.15 and 0.25 cm³/g, a bulk density of between about 1.8 and 2.3 g/cm³, a particle size of between about 0.1 and 5 mm, and a crushing strength of at least about 50 grams on a per head basis.

10. A process according to any one of the preceding claims, characterized in that said powdered metal oxide mixed in step (a) has a particle size of less than about 20 microns.

## Revendications

1. Procédé de fabrication d'une matière sphéroïdale poreuse, ayant une taille de particules uniforme réglée, dans lequel on mélange un oxyde métallique pulvérisé avec un liant organique, on transforme ce mélange en cette matière sphéroïdale, puis on le chauffe à haute température, caractérisé en ce que:

   (a)   on mélange un oxyde métallique pulvérisé, un liant organique décomposable thermiquement, comprenant un monomère d'un polymère ou copolymère thermodurcissables, et facultativement un agent de réglage de la porosité pulvérisé;

   (b)   on transforme le mélange obtenu en particules de taille uniforme; et

   (c)   on chauffe ces particules transformées de l'opération (b) à une température suffisante pour durcir ce liant; et

   (d)   on continue à chauffer ces particules à une température suffisante pour transformer ce liant durci et cet agent de réglage de la viscosité facultatif en une matière carbonée.

2. Procédé suivant la revendication 1, caractérisé en ce que ledit oxyde métallique pulvérisé est $Fe_2O_3$, de la thorine, de l'oxyde de manganèse, de l'oxyde de vanadium, ou des mélanges de ceux-ci; en ce que ledit liant décomposable thermiquement comprend du styrène, du divinylbenzène, de l'alcool furfurylique, une résine phénol-formaldéhyde liquide ou leurs mélanges; et en ce que ledit agent de réglage de la porosité facultatif est du sucre, de l'amidon, de la cellulose, du noir de carbone, de la farine de bois ou leurs mélanges.

3. Procédé suivant l'une quelconque des revendications précédentes, caractérisé en ce que ladite opération de chauffage ultérieur (d) est suivie d'une opération de chauffage supplémentaire (e) dans laquelle lesdites particules chauffées de l'opération (d) sont soumises à un chauffage supplémentaire en atmosphère oxydante à une température suffisante pour oxyder cette matière carbonée de façon à produire des particules d'oxyde métallique exemptes de carbone, poreuses, ou dans laquelle lesdites particules chauffées de l'opération (d) sont soumises à un chauffage supplémentaire en atmosphère de CO, $CO_2$ ou $CO/CO_2$ à une température suffisante pour produire des particules de carbone activé et d'oxyde métallique.

4. Procédé suivant l'une quelconque des revendications 2 ou 3, caractérisé en ce que cette opération de chauffage (c) est effectuée à environ 100°C, cette opération de chauffage (d) à environ 350°C, et cette opération de chauffage (e) à environ 900°C.

5. Procédé suivant l'une quelconque des revendications précédentes, dans lequel cette opération de transformation (b) est caractérisée en ce qu'on roule ce mélange sur un tamis d'une ouverture de maille choisie ou en ce qu'on soumet ce mélange à un malaxage réglé sous fort cisaillement pour former ces particules de taille de particules uniforme.

6. Procédé suivant l'une quelconque des revendications précédentes, caractérisé en ce que cet oxyde métallique pulvérisé et ce liant organique sont mélangés dans un rapport pondéral compris entre environ 10 et 30 parties de ce liant pour 100 parties de cet oxyde métallique, et en ce que cet agent de réglage de la viscosité facultatif est mélangé dans un rapport pondéral compris entre environ 20 et 60 parties de cet agent pour 100 parties de cet oxyde métallique.

7. Procédé suivant l'une quelconque des revendications précédentes, caractérisé en ce que le rapport volumique de ce mélange de l'opération (a) à ces particules préparées par le procédé est compris entre environ 2:3 et 1:3.

8. Procédé suivant l'une quelconque des revendications précédentes, caractérisé en ce que la porosité moyenne dans ces particules est comprise entre environ 0,025 et 20 microns et en ce que le volume total de pores dans ces particules est compris entre 0,10 et 0,35 $cm^3/g$.

9. Procédé suivant l'une quelconque des revendications précédentes, caractérisé en ce que cet oxyde métallique est $Fe_2O_3$; ces particules sont exemptes de carbone; et ces particules de $Fe_2O_3$ ont une porosité moyenne comprise entre environ 0,05 et 10 microns, un volume total de pores compris entre 0,15 et 0,25 $cm^3/g$, une densité apparente comprise entre environ 1,8 et 2,3 $g/cm^3$, une taille de particules comprise entre environ 0,1 et 5 mm et une résistance à l'écrasement d'au moins environ 50 grammes par sphère.

10. Procédé suivant l'une quelconque des revendications précédentes, caractérisé en ce que cet oxyde métallique pulvérisé mélangé dans l'opération (a) a une taille de particules inférieure à environ 20 microns.

**Patentansprüche**

1. Verfahren zur Herstellung von porösem, einheitlichem, kugelförmigem Material mit kontrollierter, einheitlicher Teilchengrösse, dadurch gekennzeichnet, dass man

   (a)   ein pulverförmiges Metalloxid, ein thermish zersetzbares, ein Monomer eines thermohärtbaren Polymeren oder Copolymeren, und gegebenenfalls ein pulverförmiges Porositäts - Regulierungsmittel enthältendes organisches Bindemittel vermischt;

   (b)   die resultierende Mischung zu Teilchen mit einheitlicher Teilchengrösse verformt und

   (c)   dies in der Stufe (b) verformten Teilchen auf eine Temperatur erhitzt, die ausreichend ist, um dieses Bindemittel zur erharten; und

   (d)   diese Teilchen weiter auf eine Temperatur erhitzt, die ausreichend ist um dieses erhartenes Bindemittel und dieses wahlweise vorhandene Porositäts-Regulierungsmittel in Kohlenstoffhaltiges Material umzuwandeln.

2. Verfahren nach Anspruch 1, dadurch gekennzeichnet, dass das Metalloxid $Fe_2O_3$ Thoriumoxid, Manganoxid, Vanadiumoxid oder eine Mischung davon ist, dass das thermisch zersetzbare organische Bindemittel Styrol, Divinylbenzol Furfurylalkohol, flüssiges Phenol-Formaldehydharz oder eine Mischung davon ist, und dass das wahlweise vorhandene Porositäts-Regulierungsmittel Zucker, Stärke, Zellulose, Russ, Holzmehl oder eine Mischung davon ist.

3. Verfahren nach mindestens einem der vorangehenden Ansprüche, dadurch gekennzeichnet, dass man der Erhitzungstufe (d) eine zusätzliche Erhitzungsstufe (e) anschliesst, wobei die erhitzten Teilchen aus Stufe (d) zusätzlich in einer oxidierenden Atmosphäre auf eine Temperatur erhitzt werden, die ausreichend ist, das Kohlenstoffhaltige Material zu oxidieren, um Kohlenstofffreie, poröse Metalloxidteilchen zu erzeugen; oder wobei die erhitzten Teilchen aus Stufe (d) in einer Atmosphäre aus CO, $CO_2$ oder $CO/CO_2$ auf einer Temperatur erhitzt werden, die ausreichend ist, um Teilchen aus aktiviertem Kohlenstoff und Metalloxid zu erzeugen.

4. Verfahren nach Anspruch 2 oder 3, dadurch gekennzeichnet, dass die Erhitzungsstufe (c) bei etwa 100°C, die Erhitzungsstufe (d) bei etwa 350°C und die Erhitzungsstufe (e) bei etwa 900°C ausgeführt werden.

5. Verfahren nach mindestens einem der vorangehenden Ansprüchen, dadurch gekennzeichnet, dass die Verformungsstufe (b) dadurch ausgeführt wird, dass man die Mischung auf einem Sieb mit gewählter Maschenweite kreist oder dass man die Mischung einem regulierten, hochscherigen Mischvorgang unterzieht, um Teilchen mit einheitlicher Teilchengrösse herzustellen.

6. Verfahren nach mindestens einem der vorangehenden Ansprüche, dadurch gekennzeichnet, dass das pulverförmige Metalloxid und das organische Bindemittel in einem Gewichtsverhältnis zwischen etwa 10 bis 30 Teilen Bindemittel pro 100 Teile Metalloxid gemischt werden, und dass das wahlweise vorhandene Porositäts-Regulierungsmittel in einem Gewichtsverhältnis zwischen etwa 20 bis 60 Teilen Bindemittel pro 100 Teile Metalloxid gemischt wird.

7. Verfahren nach mindestens einem der vorangehenden Ansprüche, dadurch gekennzeichnet, dass das Volumenverhältnis der Mischung aus Stufe (a) zu den nach dem Verfahren hergestellten Teilchen zwischen etwa 2:3 und 1:3 liegt.

8. Verfahren nach mindestens einem der vorangehenden Ansprüche, dadurch gekennzeichnet, dass die mittlere Porosität der Teilchen zwischen etwa 0,025 und 20 $\mu$m und das gesamte Porenvolumen der Teilchen zwischen 0,10 und 0,35 cm³/g beträgt.

9. Verfahren nach mindestens einem der vorangehenden Ansprüche, dadurch gekennzeichnet, dass das Metalloxid $Fe_2O_3$ ist, die Teilchen kohlenstofffrei sind, und dass die $Fe_2O_3$ Teilchen eine mittlere Porosität zwischen etwa 0,05 bis 10 $\mu$m, ein Gesamtporenvolumen zwischen 0,15 und 0,25 cm³/g, ein Schüttgewicht zwischen etwa 1,8 und 2,3 g/cm³, eine Teilchengrösse zwischen etwa 0,1 und 5 mm und eine Druckfestigkeit von mindestens etwa 50 g, basierend pro Kügelchen, aufweisen.

10. Verfahren nach mindestens einem der vorangehenden Ansprüche, dadurch gekennzeichnet, dass das in Stufe (a) vermischte, pulverförmige Metalloxid eine Teilchengrösse von weniger als etwa 20 $\mu$m aufweist.